**Europäisches Patentamt**

**European Patent Office**

**Office européen des brevets**

(19)

(11) Veröffentlichungsnummer: **0 281 630**
**A1**

(12)

# EUROPÄISCHE PATENTANMELDUNG
Veröffentlicht nach Art. 158 Abs. 3 EPÜ

(21) Anmeldenummer: **86907016.9**

(22) Anmeldetag: **23.09.86**

(51) Int. Cl.³: **B 01 D 3/30**
**B 01 D 45/12**

Daten der zugrundeliegenden internationalen Anmeldung:

(86) Internationale Anmeldenummer:
**PCT/SU86/00090**

(87) Internationale Veröffentlichungsnummer:
**WO88/02273 (07.04.88 88/08)**

(43) Veröffentlichungstag der Anmeldung:
**14.09.88 Patentblatt 88/37**

(84) Benannte Vertragsstaaten:
**DE FR GB IT SE**

(71) Anmelder: **UKRAINSKY NAUCHNO-ISSLEDOVATELSKY INSTITUT PRIORODNYKH GAZOV 'UKRNIIGAZ'**
**Krasnoshkolnaya nab., 20**
**Kharkov, 310125(SU)**

(72) Erfinder: **KISELEV, Viktor Mikhailovich**
**ul. Komandarma Uborevicha, 22-64**
**Kharkov, 310144(SU)**

(74) Vertreter: **Eitle, Werner, Dipl.-Ing. et al,**
**Hoffmann, Eitle & Partner Patentanwälte Arabellastrasse 4**
**D-8000 München 81(DE)**

(54) **VERWIRBELUNGSVORRICHTUNG FÜR MASSENAUSTAUSCH-TRENNUNGSAPPARATE.**

(57) Der Axialwirbler eines Kontaktscheideelementes von Stoffaustausch- und Scheideapparaten enthält eine Buchse (I) mit verschlossenem Eingangsende und offenem Ausgangsende, an deren Aussenfläche Schaufeln (2) angeordnet sind, welche zur Längsachse der Buchse (I) im Bereich ihres Ausgangsendes geneigt sind. An dem Ausgangsende der Buchse (I) ist koaxial mit ihr ein Prallelement (6) angebracht, das in Form eines Rotationskörpers ausgebildet ist, wobei die Erzeugende seiner Aussenfläche (9) eine solche Form aufweist, dass die Tangente an diese Erzeugende in ihrem von den Schaufeln (2) am äussersten entfernten Punkt in einem Winkel von 0 bis 15° zur Längsachse der Buchse (I) geneigt verläuft.

FIG.1

EP 0 281 630 A1

# AXIALWIRBLER EINES KONTAKTSCHEIDEELEMENTES

## Gebiet der Technik

Die Erfindung bezieht sich auf die Gas-Flüssigkeits-Technik, genauer auf Stoffaustausch- und Scheidungsapparate für Gas-Flüssigkeitssysteme und betrifft insbesondere Axialwirbler von Kontaktscheidelementen.

Die vorliegende Erfindung eignet sich für Vorrichtungen, welche in der Gas-, Erdöl-, chemischen, wärmeenergietechnischen und anderen Industriezweigen zur apparativen Gestaltung der Stoffaustauschprozesse in Gas-Flüssigkeitssystemen (Absorption, Desorption, Rektifikaton) sowie in mechanischen Gasreinigungsprozessen im Nassverfahren zum Einsatz kommen.

Am wirkungsvollsten ist die Verwendung dieser Erfindung in Gas-Flüssigkeits-Stoffaustauschkolonnen und Hochdruckscheidern, in denen Wärme- und Stoffaustauschprozesse mit nachfolgender Scheidung der in Kontakt getretenen Phasen ablaufen, und zwar Abscheidung der Gaskondensattropfen, des in Kontakt getretenen Absorptionsmittels oder des Rückflusses aus dem Dampf-Gas-Trägerstrom, des mineralisierten Schichtwassers und der Hydratbildungsinhibitore (Glykole oder Methanol) aus dem Gasstrom in Aufbereitungs- und Verarbeitungsanlagen für kohlenwasserstoffhaltige Erdgase sowie Erdölgase.

## Zugrundeliegender Stand der Technik

Es besteht zur Zeit für die Stoffaustauschkolennen und Gas-Flüssigkeitsscheider das Problem der Effektivitätserhöhung,, der Metallaufwandverminderung sowie der Leistungs- und Zuverlässigkeitssteigerung. Da die Stoffaustauschkolonnen und Gas-Flüssigkeits-Scheider Hauptapparate bei den Gasaufbereitungs- und Verarbeitungsprozessen sind, so bahnt die Lösung des obenerwähnten Problems den Weg zur Schaffung von in Kleinbauweise ausgeführten kompakten Gasverarbeitungs- und Scheidungsanlagen für Gaskondensatlagerstätten des Kontinentalschelfs und der jenseits des Polarkreises gelegenen Regionen, wo auf kleine Gewichte und Ausmasse und hohe spezifische Leistungsfähigkeit der Ausrüstung besonderen Wert gelegt wird.

Es ist ein Mehrschaufel-Axialwirbler zur Phasentrennung bekannt, der ein durch ein Bündel von massiven geneigten Schaufeln durchgehendes koaxiales Rohr zur Umführung des Gases im Umlaufkreis "Absetzbereich-Unterdruckbereich" in der Mitte des Heckteils des Wirblers enthält. (SU-Urheberschein Nr. 436677, Int. Cl. B 04 C 3/06, veröffentlicht am 25.07.74).

Der betreffende Wirbler besitzt jedoch wegen eines sperrigen Umlaufsystems ein grosses Längsmass.

Es ist weiterhin ein Axialwirbler eines Kontaktscheideelementes bekannt, dessen Schaufeln durchgehende Radialkanäle aufweisen (SU-Urheberschein Nr. 203622, Int. Kl. B OI D, veröffentlicht am 09.I0.67), und über dem Wirbler ein daran anstossendes Prallelement in Form eines Konfusors angeordnet ist, welches zum Einengen der durch dieses durchgehenden verdrallten Gas-Flüssigkeits-Strömung bestimmt ist.

Diese Ausführung ermöglicht die Intensivierung der Wärme- und Stoffaustauschprozesse und der Phasentrennung in Gas-Flüssigkeitssystemen.

Die Konfusoreinengung des verdrallten Stromes vergrössert jedoch den Energieaufwand für dessen Durchstossen und vermindert gleichzeitig den Durchsatz, weil die Stromgeschwindigkeit an der Schnittstelle des Konfusors durch einen bestimmten Wett begrenzt ist, ausgehend von den Bedingungen, eine zuverlässige Abscheidung der in Kontakt getretenen Gas- und Flüssigkeitsphasen zu bewirken.

Es ist auch ein Axialwirbler zum Fliehkraftabscheiden der Phasen eines Gas-Flüssigkeitsgemisches bekannt (US-PS Nr. 3693329, Int. Kl. B OI d 45/I2). Dieser Wirbler stellt ein Bündel von an einer Mittelbuchse befestigten geneigten Schaufeln dar, wobei zum Umlaufen des zu scheidenden Gases eine Unterdruckzone verwendet wird, die längs der Achse der Hohlbuchse des Wirblers, in die das Gas über durchgehende Kanäle einzelner Schaufeln (Hohlschaufeln) eingesaugt wird, entsteht. Die Kanäle der Schaufeln können in Einzelfällen tangential zum Innenhohlraum der Mittelbuchse herangeführt werden. Die eigentliche Buchse hat hinter der Ausgangsschnittstelle der Schaufeln einen zigarrenförmigen Fortsatz mit einer zügigen Verjüngung ihrer Aussenfläche, die dadurch zustande kommt, dass die Wanddicke auf das Mass des zylindrischen offenen Hohlraumes abnimmt.

Eine solche Ausführung des Axialwirblers hat gegenüber den obengenannten den Vorteil eines erhöhten Gasdurchsatzes des Kontaktscheideelementes.

Der Flüssigkeitsdurchsatz der bekannten Vorrichtung bleibt jedoch niedrig, was auf den schwachen Drall der Flüssigkeitstropfen, die von dem umlaufenden Gas mitgerissen sind, zurückzuführen ist. Dieser schwache Drall macht es erforderlich, den zigarrenförmigen Heckteil des Wirblers in bedeutender Entfernung von der Scheidungsbaugruppe anzuordnen, um den abgeschiedenen Flüssigkeitsfilm abzuführen.

Darüber hinaus trägt der zigarrenförmige Fortsatz der Wirblerbuchse dazu bei, dass einzelne Tropfen über dessen Oberfläche geführt werden und in kleiner Entfernung von der Mittelachse des Wirblers abreissen, wo der Stromdrall nicht genügend wirkungsvoll ist, um die Phasen zuverlässig trennen zu können, und einen beträchtlichen Flüssigkeitsverbrauch hervorruft.

Beim Stillstand des Apparates kann sich die Flüssigkeit in dem Buchsenhohlraum ansammeln, und dies benötigt den zusätzlichen Heizdampf- und Heisswasseraufwand zu deren Entfernen bei Revision und Reparatur des Apparates.

Die gesamten aufgezählten Nachteile des bekannten Wirblers führen zu seiner vorzugsweise waagerechten Anordnung, wodurch sein Einsatzbereich eingeschränkt wird, weil bei den Stoffaustauschapparaten in der Regel die senkrechte Anordnung des Wirblers erforderlich ist.

Offenbarung der Erfindung

Die Erfindung liegt die Aufgabe zugrunde, einen Axialwirbler für Kontaktscheideelemente von Stoffaustausch- und Scheidungsapparaten zu schaffen, bei dem aufgrund der konstruktiven Gestaltung des Durchflussteils eine hohe Effektivität der Wärme- und Stoffaustausch- sowie Phasentrennungsprozesse unter Verminderung des Längsmasses des Elementes gesichert werden kann.

Das Wesen der Erfindung besteht darin, dass ein Axialwirbler eines Kontaktscheideelementes von Stoffaustausch- und Scheidungsapparaten, enthaltend eine Hohlbuchse, die ein verschlossenes Eingangsende und ein offenes Ausgangsende auf der Eintritts- bzw. Austrittsseite des zu verwirbelnden Strömungsmediums aufweist, und Schaufeln, die an der Aussenfläche der Buchse im Bereich deren Ausgangsende geneigt zur Längsachse derselben angeordnet sind, erfindungsgemäss mit einem Prallelement versehen ist, das gleichachsig mit der Buchse an deren Ausgangsende angeordnet und in Form eines Rotationskörpers ausgebildet ist, wobei die Erzeugende der Aussenfläche des genannten Rotationskörpers eine solche Form aufweist, dass die Tangente an diese Erzeugende in ihrem von den Schaufeln am äussersten entfernten Punkt in einem Winkel von 0 bis 15° zur Längsachse der Buchse geneigt verläuft.

Durch eine solche bauliche Gestaltung des Prallelementes können die Prozesse des Wärme- und Stoffaustausches zwischen Flüssigkeit und Gas intensiviert werden, und zwar erstens aufgrund der Benetzung der Elementenoberfläche, zweitens aufgrund der tangentialen Bewegungsrichtung der auf seine Oberfläche gelangenden Tropfen und drittens aufgrund der Verlängerung durch das Prallelement der aktiven turbulenten Zone des Kontaktes zwischen der Flüssigkeit und dem Gas. Ausserdem ermöglicht das Prallelement, die gesamte Länge der Scheidungszone stark zu verkürzen. Dies wird dadurch erreicht, dass aufgrund einer grösseren Entfernung der Schnittstelle des Prallelementes von der Längsachse des Wirblers die von seiner Schnittstelle abreissenden Tropfen einer grösseren Einwirkung der Fliehkräfte ausgesetzt sind als es bei den bekannten Wirblern der Fall ist.

Das Prallelement kann vorteilhafterweise in Form eines Diffusors ausgebildet sein, dessen verjüngtes Ende an der Buchse befestigt ist und dessen erweitertes Ende einen Aussendurchmesser ($D_I$) aufweist, der 0,5 bis 0,7 des Umkreisdurchmessers (D) der Schaufeln gleich ist.

Die bauliche Gestaltung des Prallelementes in Form eines Diffusors gestattet, den verdrallten Strahl beständiger zu machen, ohne dass der Strömungswiderstand merklich wächst, indem man den Durchmesser $D_I$ auswählt, der der Grenze des zehtralen Wirbelkernes des verdrallten Strahles entspricht. Dies soll ausführlicher erklärt werden. Ein vereinfachtes Modell des verdrallten Gasstromes stellt einen hohlen sich drehenden Strahl mit einem in kinematischer und dynamischer Hinsicht schwachen Kern dar. Wenn das erweiterte Ende des Diffusors dem Durchmesser des Mittelwirbles gleich ist, d.h. den geformten verdrallten Strahl nicht einschnürt, so geschieht keine merkliche Vergrösserung des Strömungswiderstandes. Dabei treten folgende nützliche technische Erscheinungen besonders in den Vordergrund: es wird ein gegen Abklingen beständiger verdrallter Strahl geformt, es werden die Prozesse des Wärme- und Stoffaustausches und der Phasentrennung im Gas-Flüssigkeitssystem intensiviert.

In der Buchsenwandung ist es zweckmässig, durchgehende Radialbohrungen auszubilden, die am Umfang derart angeordnet sind, dass sie mindestens eine Reihe bilden.

Bei einer solchen baulichen Gestaltung des Axialwirblers kann die Flüssigkeit, die mit dem rückwärtigen Wirbelstrom oder mit dem umlaufenden Gasstrom eingeschleppt ist, aus dem inneren Hohlraum der Buchse abgeleitet werden, wodurch die Uberflutung des letzteren mit angesammelter Flüssigkeit verhindert wird. Die durchgehenden Radialbohrungen können ausserdem durch den Körper der Schaufeln hindurchgehen und somit Umlaufkanäle für Gas bilden.

Das an die Buchse anstossende Ende des Prallelementes kann zweckmässigerweise einen Innendurchmesser haben, der kleiner als der Innendurchmesser der Buchse ist, und eine Schulter an deren Innenfläche bilden.

Eine solche bauliche Gestaltung des Axialwirblers ermöglicht eine zuverlässigere Ableitung der Flüssigkeit aus dem inneren Hohlraum der Buchse, wodurch der Austrag der Flüssigkeit die Achse des Wirblers entlang vermieden wird.

Es ist zweckmässig, die Radialbohrungen im Axialwirbler zwischen den Schaufeln anzuordnen.

- 6 -

C281630

Eine derartige bauliche Gestaltung des Axialwirblers ermöglicht die Ableitung der Flüssigkeit zum Benetzen des in den geneigten Kanälen fliessenden Gas-Flüssigkeitsstromes, was zur hydrodynamischen Koagulierung feiner Tropfen und folglich zu einer vollständigeren Scheidung der Tropfen aus dem verdrallten Gasstrom beiträgt.

Die Radialbohrungen können zweckmässigerweise an dem Ausgangsende der Buchse ausgebildet und hinter den Ausgangsenden der Schaufeln des Wirblers angeordnet werden.

Durch eine solche bauliche Gestaltung kann die Flüssigkeit, indem sie von der über die Schaufeln abfliessenden Strömung abgesaugt wird, über die Bohrungen intensiver abgeleitet werden.

Die Länge des Prallelemenetes kann vorteilhafterweise 0,2 bis I,0 des Umkreisdurchmessers der Schaufeln des Wirblers betragen.

Eine solche bauliche Gestaltung gewährleistet den optimalen Betrieb des Axialwirblers. Beim Übergang vom Wirbler eines kleinen Durchmessers zum Wirbler grossen Durchmessers sinkt das genannte Verhältnis normalerweise von I,0 auf 0,2 je nach konkreten Erfordernissen.

Und zuletzt ist es zweckmässig, an das Eingangsende der Buchse koaxial zu ihr eine Strömungshaube aufzusetzen, in deren Wand eine durchgehende Bohrung ausgebildet ist, die zur Achse der Buchse in einem spitzen Winkel $\beta$ geneigt und im Schnittbereich der Innenfläche der Strömungshaube mit der Buchsenachse angeordnet ist.

Eine solche bauliche Gestaltung der Strömungshaube vermindert Eintrittsströmungsverluste, trägt zum Abblasen eines unerwünschten Wirbels an der Achse des Wirblers bei sowie ermöglicht die Ableitung und den Abfluss der Flüssigkeit beim Anhalten des Apparates.

Kurze Beschreibung der Zeichnungen

Des weiteren wird die Erfindung an Hand einer ausführlichen Beschreibung ihrer konkreten Ausführungsbeispiele unter Bezugnahme auf die Zeichnungen näher erläutert. In den Zeichnungen zeigt:

Fig. I ein Prinzipschema des erfindungsgemässen Axialwirblers, in Längsschnitt, mit dem Prallelement in Form eines Kegels, dessen Erzeugende eine Gerade ist;

Fig. 2 ein Abschnitt der Abwicklung des Axialwirblers,
in dem die Hohlschaufeln mit den massiven Schaufeln abwechseln;

Fig. 3 eine weitere Ausführung des Prallelementes in
Form eines zylindrischen Fortsatzes der Buchse des Wirblers
mit einer Schulter auf deren Innenteil, sämtliche Wirblerschaufeln sind massiv ausgeführt;

Fig. 4 eine Ausführungsform des Prallelementes, dessen
Erzeugende eine Kurze ist, und bei dem in der Strömungshaube eine Bohrung vorgesehen ist; die gesamten Schaufeln des
Wirblers sind massiv ausgeführt.

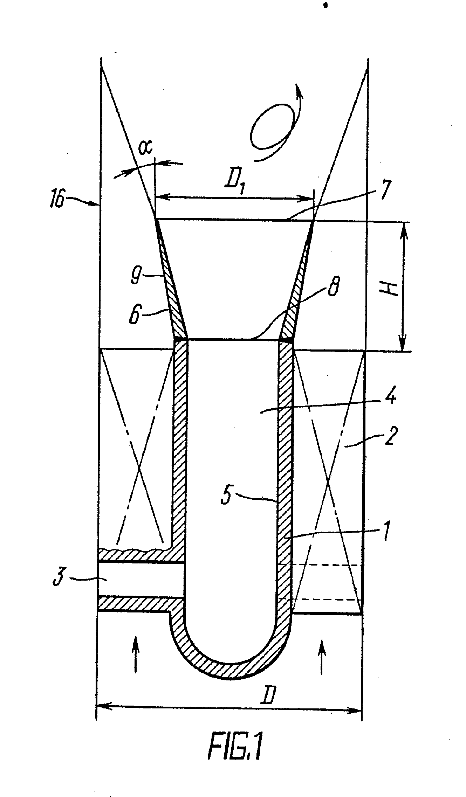

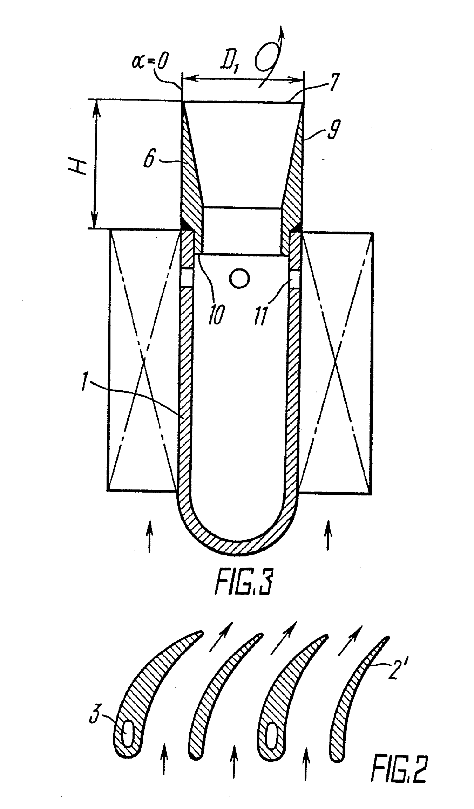

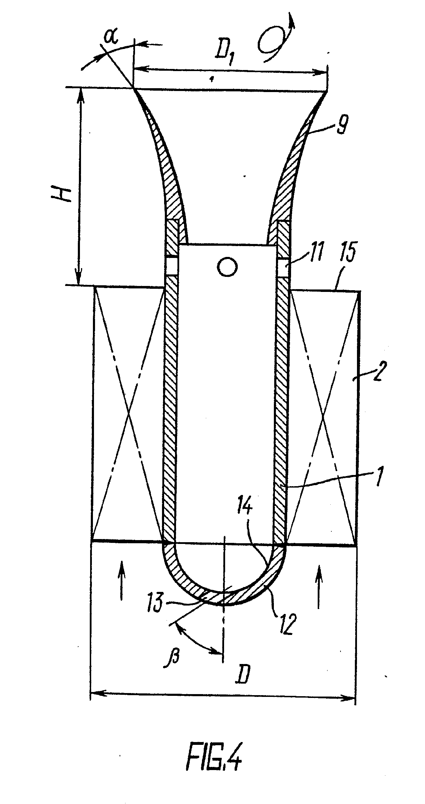

Beste Ausführungsform der Erfindung

Der Axialwirbler schliesst eine hohle Mittelbuchse I
(Fig. I) ein, an der geneigt angeordnete Schaufeln 2 befestigt sind, deren einige einen Kanal 3 haben können, welcher
in den inneren Hohlraum 4 in Richtung der Längsachse oder
tangential zur Oberfläche der Innenwand 5 mündet. Längs der
gemeinsamen Achse mit der Mittelbuchse I ist ein Prallelement 6 angebracht, das mit seiner Schnittstelle 7 nach der
Austrittsseite des verdrallten Mediums offen ist und mit
dem Ende 8 an der Buchse I sitzt. Das Prallelement 6 weist
eine Aussenfläche 9 in Form eines Rotationskörpers auf, dessen Erzeugende eine Gerade oder eine glatte Kurve solcher
Form sein kann, dass die Tangente an die Aussenfläche des
Elementes 6 an der Schnittstelle 7 desselben mit der Längsachse der Buchse einen Winkel $\alpha$ von 0 bis I5° einschliesst.

In Fig. 2 ist ein Abschnitt der Abwicklung einer Ausführungsform des Axialwirblers dargestellt, bei der die
hohlen Schaufeln 2, welche die Kanäle 3 besitzen, mit den
massiven Schaufeln 2' abwechseln. Dazu sei angemerkt, dass
die Form, Anzahl und Orientierung der Schaufeln verschieden
sein können.

Die Fig. 3 zeigt eine weitere Ausführung des Prallelementes 6 in Form eines zylindrischen Fortsatzes der Buchse I des Axialwirblers. Dabei ist das Ende 8 des Prallelementes 6 kleiner als der Innendurchmesser der Buchse I und bildet eine Schulter IO, unter der mindestens eine Reihe durchgehender Radialbohrungen II ausgebildet ist, welche in den Zwischenschaufelbereich des Wirblers münden. Die Tangente an die Aussenfläche des Elementes 6 an der Schnittstelle 7 desselben ist parallel zur Längsachse der Buchse, und der Winkel $\alpha$ = O, während der Durchmesser $D_I$ mit dem Durchmesser der Buchse zusammenfällt.

In Fig. 4 ist die Ausführungsform des Prallelementes 6 abgebildet, bei der die Erzeugende der Aussenfläche 9 dieses Elementes eine Kurve ist, während die Buchse I mit einer Strömungshaube I2 versehen ist, die an der Buchse I befestigt ist und eine durchgehende Öffnung I3 aufweist, welche in einem spitzen Winkel $\beta$ zur Buchsenachse geneigt und im Schnittbereich der Innenfläche I4 der Strömungshaube mit der Achse der Buchse I angeordnet ist. Die Bohrungen 11 befinden sich hinter den Ausgangsenden I5 der Schaufeln 2. Die Krümmung und die Form der Erzeugenden werden aus der Bedingung $D_I$ = (0,5 bis 0,7)D, $\alpha \leq I5°$ und die Höhe H = (0,2 bis I,0)D ausgewählt.

In Fig. I bis 4 ist die senkrechte Ausführungsform des Wirblers dargestellt, aber er kann auch in waagerechter oder geneigter Lage arbeiten.

Die Wirkungsweise des Axialwirblers ist die folgende.

Ein Strom der Flüssigkeitstropfen zusammen mit dem Gas wird in mit den Pfeilen angedeuteter Richtung (s. die Zeichnungen) dem Wirbler zugeführt. Im Passieren des Wirblers wird der Strom um die Längsachse der Mittelbuchse I verdrallt und fliesst weiter in einer Wirbelkammer I6 (in Fig. I ist die Wand der Wirbelkammer mit zwei dünnen Linien als Fortsetzung der umschriebenen Aussenfläche der Schaufeln angedeutet) in Form eines verdrallten Strahles. Dabei laufen die Prozesse des Stoff- und Wärmeaustausches zwischen der Flüssigkeit und dem Gas ab.

In Richtung der Längsachse des Wirblers entsteht eine Unterdruckzone. Das aus dem Scheidungsbereich abgeführte Gas strömt von selbst mit den mitgerissenen Flüssigkeitstropfen zum Umlaufen über die Kanäle 3 in den inneren Hohlraum 4, wo der Druck minimal ist, und tritt in Form eines
sich drehenden Strahles über das Ende 8 des Prallelementes
6 aus. Im einfachsten Fall werden die Flüssigkeitstropfen
auf die Innenwand 5 der Buchse I abgeschleudert, fliessen
dann über das Prallelement 6 zur Schnittstelle 7 hinab,
von welcher sie als verdrallter Strahl eines fluiden Mediums
auf der in Fig. I mit geneigten Strichlinien angedeuteten
kegelförmigen Bahn abreissen.

Die Aussenfläche 9 des Prallelementes 6 wird von der
Flüssigkeit benetzt, weil die aus dem Zwischenschaufelraum
ausfliegenden Flüssigkeitstropfen über die Oberfläche 9
gleiten, was die Wärme- und Stoffaustauschprozesse im Gas-
Flüssigkeitssystem intensiviert.

Einer zuverlässigeren Scheidung der vom umlaufenden
Strom eingebrachten Tropfen dienen die Bohrungen II (Fig. 3),
die unter der Schulter IO angeordnet sind. Die Anordnung
der Bohrungen im Zwischenschaufelbereich hat eine weniger
intensive Flüssigkeitsabführung als im Fall der Anordnung
derselben hinter den Ausgangsenden I5 der Schaufeln 2 (Fig.4)
zur Folge.

Die Strömungshaube I2 vermindert die Eintrittsström-
ungsverluste, dorch an ihrer Innenfläche I4 sammelt sich
die Flüssigkeit an. Zum Abblasen der Flüssigkeit aus dem
Wirbelkern dient die geneigte durchgehende Offnung I4. Durch
diese Offnung fliessen beim Stehenbleiben des Apparates die
Flüssigkeitsreste ab.

Die Ausführung des Axialwirblers gemäss der Erfindung
macht es möglich, ein in Kleinbauweise erstelltes Kontaktscheideelement für Wärme- und Stoffaustauschkolonnen und
Gas-Flüssigkeitsscheider zu schaffen.

Gewerbliche Anwendbarkeit

Die vorliegende Erfindung gestattet die Schaffung
eines Axialwirblers für hochleistungsfähige Kontaktscheide-
elemente, die in verschiedenartigsten Stoffaustauschappa-
raten und Gas-Flüssigkeitsscheidern eingebaut werden. Sie eignet sich für den Einsatz in der Erdöl- und Erdgasindustrie, der chemischen Industrie sowie der Wärmeenergiewirtschaft in einer breiten Palette von Prozessen, wo Gas-Flüssigkeitssysteme behandelt werden müssen.

0281630

PATENTANSPRÜCHE

I. Axialwirbler eines Kontaktscheideelementes von Stoffaustausch- und Scheiderapparaten, enthaltend eine hohle Buchse (I), die ein verschlossenes Eingangsende und ein offenes Ausgangsende auf der Eintritts- bzw. Austrittsseite des zu verwirbelnden Strömungsmediums aufweist, und Schaufeln (2), die an der Aussenfläche der Buchse (I) im Bereich ihres Ausgangsendes geneigt zur Längsachse derselben angeordnet sind, dadurch g e k e n n z e i c h n e t, dass er mit einem Prallelement (6) versehen ist, das gleichachsig mit der Buchse (I) an deren Ausgangsende angeordnet und in Form eines Rotationskörpers ausgebildet ist, wobei die Erzeugende der Aussenfläche (9) des genannten Rotationskörpers eine solche Form aufweist, dass die Trangente an diese Erzeugende in ihrem von den Schaufeln (2) am äussersten entfernten Punkt in einem Winkel von 0 bis I5° zur Längsachse der Buchse (I) geneigt verläuft.

2. Axialwirbler nach Anspruch I, dadurch g e k e n n z e i c h n e t, dass das Prallelement (6) in Form eines Diffusors ausgebildet ist, dessen verjüngtes Ende an der Buchse (I) befestigt ist und dessen erweitertes Ende einen Aussendurchmesser aufweist, der 0,5 bis 0,7 des Umkreisdurchmessers der Schaufeln (2) gleich ist.

3. Axialwirbler nach Anspruch I oder 2, dadurch g e k e n n z e i c h n e t, dass in der Wandung der Buchse (I) durchgehende Radialbohrungen (II) ausgebildet sind, die am Umfang derart angeordnet sind, dass sie mindestens eine Reihe bilden.

4. Axialwirbler nach einem beliebigen der Ansprüche I bis 3, dadurch g e k e n n z e i c h n e t, dass das an der Buchse (I) befestigte Ende (8) des Prallelementes (6) einen Innendurchmesser hat, der kleiner als der Innendurchmesser der Buchse (I) ist, und eine Schulter (IO) an deren Innenfläche bildet.

5. Axialwirbler nach Anspruch 3, dadurch g e k e n n z e i c h n e t, dass die Radialbohrungen (II) zwischen den Schaufeln (2) angeordnet sind.

6. Axialwirbler nach Anspruch 3, dadurch g e k e n n - z e i c h n e t, dass die Radialbohrungen (II) am Ausgangsende der Buchse (I) ausgebildet und hinter den Ausgangsenden (I5) der Schaufeln (2) angeordnet sind.

7. Axialwirbler nach einem beliebigen der Ansprüche 4 bis 6, dadurch g e k e n n z e i c h n e t, dass die Länge des Prallelementes (6) 0,2 bis I,0 des Umkreisdurch- messers der Schaufeln (2) beträgt.

8. Axialwirbler nach Anspruch 7, dadurch g e k e n n - z e i c h n e t, dass am Eingangsende der Buchse (I) koaxial mit der letzteren eine Strömungshaube (I2) aufgesetzt ist, in deren Wand eine durchgehende Offnung (I3) vorhanden ist, die in einem spitzen Winkel $\beta$ zur Achse der Buchse (I) geneigt und im Schnittbereich der Innenfläche (I4) der Strömungshaube (I2) mit der Achse der Buchse (I) angeordnet ist.

FIG.1

FIG.3

FIG.2

FIG.4

# INTERNATIONAL SEARCH REPORT

0281630—

International Application No PCT/SU 86/00090

## I. CLASSIFICATION OF SUBJECT MATTER (if several classification symbols apply, indicate all)

According to International Patent Classification (IPC) or to both National Classification and IPC

IPC⁴: B 01 D 3/30, 45/12

## II. FIELDS SEARCHED

### Minimum Documentation Searched [7]

| Classification System | Classification Symbols |
|---|---|
| IPC⁴ | B 01 D 3/30, 45/12, 3/26, 3/14, B 04 C 3/06 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 436677, (V.M. Kiselev et al.), 05 January 1975 (05.01.75), see column 2, lines 7-21, the claims, figure 1 | 1 |
| A | US, A, 3693329, (Porta-Test Manufacturing Ltd.), 26 September 1972 (26.09.72), see the abstract | 1 |
| A | SU, A1, 203622, (V.M. Kiselev et al.), 18 December 1967 (18.12.67), see the claims, the drawing | 3;5 |
| A | US, A, 3868235, (Gutehoffnungshutte Sterkrade Aktiengesellschaft), 25 February 1975. (25.02.75), see the abstract | 1,4 |
| A | US, A, 3961923, (Aktiebolaget Atomenergi), 08 June 1976 (08.06.76), see the abstract | 1,2 |
| A | US, A, 4394138, (John R. Schilling),19 July 1983 (19.07.83), see the abstract | 1,2,8 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the International filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 15 May 1987 (15.05.87) | 15 June 1987 (15.06.87) |

| International Searching Authority | Signature of Authorized Officer |
|---|---|
| ISA/SU | |

Form PCT/ISA/210 (second sheet) (January 1985)